# NEUE EUROPÄISCHE PATENTSCHRIFT

(11) **EP 3 458 510 B2**
(45) Veröffentlichungstag und Bekanntmachung des Hinweises auf die Entscheidung über den Einspruch: **24.05.2023**
(45) Hinweis auf die Patenterteilung: 24.06.2020
(21) Anmeldenummer: 17725932.2
(22) Anmeldetag: 19.05.2017
(51) Int. Cl.: C08K 5/09, C08K 5/103, C08L 69/00

(54) **POLYCARBONAT-ZUSAMMENSETZUNGEN ENTHALTEND EINE CARBONSÄURE UND DEREN GLYCEROL- ODER DIGLYCEROLESTER**
POLYCARBONATE COMPOSITIONS CONTAINING A CARBOXYLIC ACID AND THEIR OR GLYCEROL OR DIGLYCEROL ESTERS
COMPOSITIONS A BASE DE POLYCARBONATE CONTENANT DE L'ACIDE CARBOXYLIQUE ET LEURS ESTERS DE GLYCEROL OU DIGLYCEROL

(30) Priorität: 19.05.2016 EP 16170251
(43) Veröffentlichungstag der Anmeldung: 27.03.2019
(73) Patentinhaber: Covestro Deutschland AG, 51373 Leverkusen (DE)
(72) Erfinder: WEHRMANN, Rolf, 47800 Krefeld (DE); HEUER, Helmut, Werner, 57074 Siegen (DE); BOUMANS, Anke, 47574 Goch (DE)
(74) Vertreter: Levpat
(86) Internationale Anmeldenummer: PCT/EP2017/062079
(87) Internationale Veröffentlichungsnummer: WO 2017/198808

(56) Entgegenhaltungen:
- EP-A1- 2 955 201
- WO-A1-2010/072344
- DE-A1-102009 007 762
- US-A1- 2005 215 750

## Beschreibung

Die Erfindung betrifft Zusammensetzungen enthaltend Polycarbonat sowie Fließfähigkeitsverbesserer und aus den Zusammensetzungen erhältliche Formteile. Die Zusammensetzungen weisen verbesserte rheologische und optische Eigenschaften auf.

Insbesondere für dünnwandige (Gehäuse-)Teile, etwa in Ultrabooks, Smartphones oder Smartbooks, ist eine niedrige Schmelzeviskosität erforderlich, damit Bauteile mit gleichmäßiger Wandstärke realisiert werden können. Weitere Anwendungsbereiche, in denen gute Fließfähigkeiten gefordert werden, sind im Automobilbereich (z. B. Scheinwerferabdeckungen, Blenden, Lichtleitsysteme) und im E/E-Bereich (Beleuchtungskomponenten, Gehäuseteile, Abdeckungen, Smart Meter Anwendungen).

Herkömmlich wird zur Fließverbesserung Bisphenol A-Diphosphat (BDP) verwendet, und zwar in Mengen von bis zu mehr als 10 Gew.-%, um den gewünschten Effekt zu erzielen. Dadurch wird aber die Wärmeformbeständigkeit stark herabgesetzt.

Im Stand der Technik findet der Fachmann keinen Hinweis darauf, wie er bei annähernd gleicher Wärmeformbeständigkeit die Fließfähigkeit und gleichzeitig die optischen Eigenschaften von Polycarbonatzusammensetzungen verbessern kann.

Aus dem Stand der Technik sind Zusammensetzungen mit hoher Transparenz und guter Wärmeformbeständigkeit bekannt, deren Fließfähigkeit aber einer weiteren Verbesserung bedarf, etwa aus DE 10 2009 007762 A1, WO 2010/072344 A1 und US 2005/215750 A1.

Es bestand daher die Aufgabe, Zusammensetzungen enthaltend aromatisches Polycarbonat zu finden, die bei nahezu gleich bleibender Wärmeformbeständigkeit verbesserte optische Eigenschaften und gleichzeitig eine verbesserte Fließfähigkeit aufweisen.

Überraschenderweise wurde gefunden, dass Polycarbonatzusammensetzungen immer dann eine verbesserte Fließfähigkeit und bessere optische Eigenschaften aufweisen, wenn bestimmte Mengen von Carbonsäuren und deren Glycerol- und/oder Diglycerolestern enthalten sind. Dabei bleibt die Wärmeformbeständigkeit (Vicat-Temperatur) nahezu unverändert erhalten.

Die Polycarbonatzusammensetzungen, enthaltend die Carbonsäuren und deren Glycerol- und/oder Diglycerolester, zeigen bevorzugt gute Schmelzestabilitäten mit verbesserten rheologischen Eigenschaften, und zwar eine höhere Schmelzevolumenfließrate (MVR), bestimmt nach DIN EN ISO 1133:2012-03 (bei einer Prüftemperatur von 300 °C, Masse 1,2 kg), eine verbesserte Schmelzeviskosität, bestimmt nach ISO 11443:2005, und verbesserte optische Eigenschaften, messbar an einem niedrigeren Yellowness Index (YI) und/oder an einer höheren optischen Transmission, bestimmt nach ASTM E 313-10, im Vergleich zu entsprechenden Zusammensetzungen, die ansonsten dieselben Komponenten außer den Carbonsäuren und deren Glycerol- oder Diglycerolestern enthalten. Dabei zeichnen sich die Zusammensetzungen weiterhin durch gute mechanische Eigenschaften aus, messbar zum Beispiel anhand der Kerbschlagzähigkeit, welche nach ISO 7391-2:2006 bestimmt wird oder anhand der Schlagzähigkeit, welche nach ISO 7391-2:2006 ermittelt wird.

Gegenstand der vorliegenden Erfindung sind daher Zusammensetzungen, enthaltend A) 20,0 Gew.-% bis 99,95 Gew.-% aromatisches Polycarbonat und B) 0,05 Gew.-% bis 10,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Digycerol wobei als Komponente B eine Mischung vorliegt, welche durch Teilveresterung von Glycerol und/order Diglycerol mit einem Monocarbonsäuregemisch, enthalted zwei order mehr Monocarbonsäuren mit einer Kettenlänge von 6 bis 30 C-Atomen, erhältlich ist,
und wobei das Monocarbonsäuregemisch Ölsäure enthält.

Vorzugsweise weisen die Zusammensetzungen
A) 20,0 Gew.-% bis 99,95 Gew.-%, weiter bevorzugt 83,0 bis 99,80 Gew.-% aromatisches Polycarbonat,
B) 0,05 Gew.-% bis 10,0 Gew.-%, weiter bevorzugt 0,1 bis 8,0 Gew.-%, noch weiter bevorzugt 0,2 bis 6,0 Gew.-% des Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol, wobei als Komponente B eine Mischung vorliegt, welche durch Teilveresterung von Glycerol und/order Diglycerol mit einem Monocarbonsäuregemisch, enthaltend zwei order mehr Monocarbonsäuren mit einer Kettenlänge von 6 bis 30 C-Atomen, erhältlich ist,
   und wobei das Monocarbonsäuregemisch Ölsäure enthält,
C) 0,0 Gew.-% bis 1,0 Gew.-% Thermostabilisator und
D) 0,0 Gew.-% bis 8,0 Gew.-% weitere Additive auf.

Weiter bevorzugt bestehen solche Zusammensetzungen aus
A) 87,0 Gew.-% bis 99,95 Gew.-% aromatischem Polycarbonat,
B) 0,05 Gew.-% bis 6,0 Gew.-% des Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol, wobei als Komponente B eine Mischung vorliegt, welche durch Teilveresterung von Glycerol und/order Diglycerol mit einem Monocarbonsäuregemish, enthaltend zwei order mehr Monocarbonsäuregemisch mit einer Kettenlänge von 6 bis 30 C-Atomen, erhältlich ist,
   und wobei das Monocarbonsäuregemisch Ölsäure enthält,
C) 0,0 Gew.% bis 1,0 Gew.-% Thermostabilisator und und wobei das Monocarbonsäuregemisch Ölsäure enthält
D) 0,0 Gew.% bis 6,0 Gew.-% eines oder mehrerer weiterer Additive aus der Gruppe der Antioxidantien, Entformungsmittel, Flammschutzmittel, UV-Absorber, IR-Absorber, Antistatika, optischen Aufheller, Farbmittel aus der Gruppe der organischen oder anorganischen Pigmente, Additive zur Lasermarkierung und/oder Schlagzähmodifikatoren, ganz besonders bevorzugt ist die Zusammensetzung transparent und das bzw. sind die Additive ausgewählt aus der Gruppe der Antioxidantien, Entformungsmittel, Flammschutzmittel, UV-Absorber, IR-Absorber, Antistatika, optischen Aufheller, Farbmittel aus der Gruppe der organischen Pigmente, und/oder Additive zur Lasermarkierung.

Vorzugsweise sind die erfindungsgemäßen Zusammensetzungen transparent.

"Transparent" im erfindungsgemäßen Sinn bedeutet, dass die Zusammensetzungen eine visuelle Transmission Ty (D65 in 10° Beobachtung) von mindestens 84%, bestimmt nach ISO 13468-2:2006 bei einer Dicke von 4 mm, und eine Trübung < 5%, bestimmt nach ASTM D1003:2013 bei einer Schichtdicke von 4 mm, aufweisen.

Durch die Verwendung des Gemischs, enthaltend die Monocarbonsäure und deren Glycerol- oder Diglycerolester, in transparenten Polycarbonatzusammensetzungen lassen sich bevorzugt auch die optischen Eigenschaften verbessern. Durch Zusatz des Gemischs wird die Transmission, bestimmt nach ISO 13468-2:2006 bei 4 mm Dicke, erhöht.

C₁- bis C₄-Alkyl in der nachfolgenden Beschreibung der Erfindung steht im Rahmen der Erfindung beispielsweise für Methyl, Ethyl, n-Propyl, iso-Propyl, n-Butyl, sec.-Butyl, tert.-Butyl, C₁- bis C₆-Alkyl und darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl. C₁- bis C₁₀-Alkyl steht darüber hinaus beispielsweise für n-Heptyl und n-Octyl, Pinakyl, Adamantyl, die isomeren Menthyle, n-Nonyl, n-Decyl. C₁- bis C₃₄-Alkyl steht darüber hinaus beispielsweise für n-Dodecyl, n-Tridecyl, n-Tetradecyl, n-Hexadecyl oder n-Octadecyl. Gleiches gilt für den entsprechenden Alkylrest, beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆- bis C₃₄-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Im Rahmen der vorliegenden Erfindung beziehen sich die angegebenen Gew.-% der Komponenten A, B, C und D - soweit nicht explizit anders angegeben - jeweils auf das Gesamtgewicht der Zusammensetzung. Die Zusammensetzung kann neben den Komponenten A, B, C und D weitere Komponenten enthalten. In einer bevorzugten Ausführungsform enthält die Zusammensetzung keine weiteren Komponenten, sondern die Komponenten A) bis D) ergänzen sich zu 100 Gew.-%; d.h. die Zusammensetzung besteht aus den Komponenten A, B, C und D.

Die erfindungsgemäßen Zusammensetzungen werden vorzugsweise zur Herstellung von Formteilen verwendet. Die Zusammensetzungen weisen bevorzugt eine Schmelze-Volumenfließrate (MVR) von 2 bis 120 cm³/(10 min), weiter bevorzugt von 3 bis 90 cm³/(10 min), bestimmt nach ISO 1133:2012-3 (Prüftemperatur 300°C, Masse 1,2 kg), auf.

Die einzelnen Bestandteile der erfindungsgemäßen Zusammensetzungen sind im Folgenden noch näher erläutert:

### Komponente A

Unter "Polycarbonat" im erfindungsgemäßen Sinne werden sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Die erfindungsgemäße Zusammensetzung enthält als Komponente A 20,0 Gew.-% bis 99,95 Gew.-% aromatisches Polycarbonat. Vorzugsweise beträgt die Menge des aromatischen Polycarbonats in der Zusammensetzung mindestens 50 Gew.-%, weiter bevorzugt mindestens 60 Gew.-% und noch weiter bevorzugt mindestens 75 Gew.-%, besonders bevorzugt mindestens 82 Gew.-%, ganz besonders bevorzugt mindestens 87 Gew.-% wobei ein einzelnes Polycarbonat oder eine Mischung mehrerer Polycarbonate vorliegen kann.

Die Herstellung der Polycarbonate, die in den Zusammensetzungen enthalten sind, erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 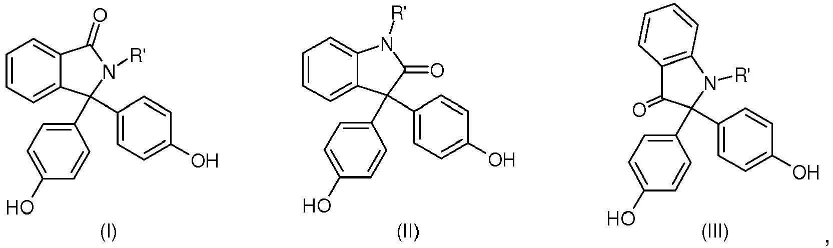 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und (III) 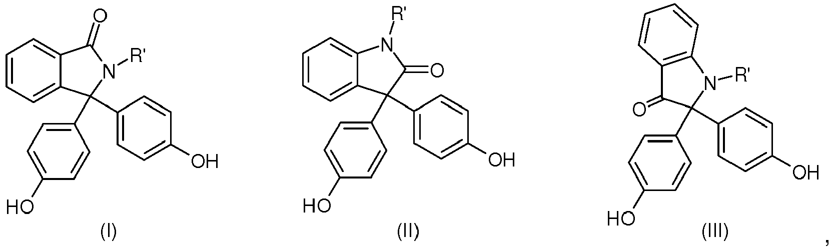 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate.

Zur Einarbeitung von Additiven wird die Komponente A bevorzugt in Form von Pulvern, Granulaten oder von Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 7 bis 15 cm³/(10 min), weiter bevorzugt mit einer Schmelze-Volumenfließrate MVR von 8 bis 12 cm³/(10 min) und besonders bevorzugt mit einer Schmelze-Volumenfließrate MVR von 8 bis 11 cm³/(10 min), bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 4,0 bis 10,0 Gew.-%, wobei dieses aromatische Polycarbonat bevorzugt auf Basis von Bisphenol A mit einer bevorzugten Schmelze-Volumenfließrate MVR von 3 bis 8 cm³/(10 min), weiter bevorzugt mit einer Schmelze-Volumenfließrate MVR von 4 bis 7 cm³/(10 min), und besonders bevorzugt mit einer Schmelze-Volumenfließrate MVR von 6 cm³/(10 min), bestimmt gemäß ISO 1133 (Prüftemperatur 300°C, Masse 1,2 kg), ist.

In einer bevorzugten Ausführungsform enthält die Zusammensetzung als Komponente A ein Copolycarbonat, umfassend eine oder mehrere Monomereinheiten der Formel (1), 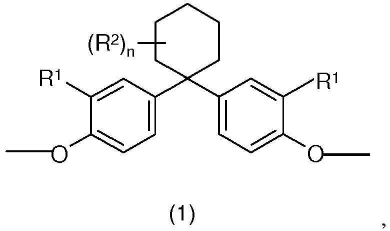 wobei
R¹ für Wasserstoff oder C₁- bis C₄-Alkylreste, bevorzugt für Wasserstoff, steht,
R² für C₁- bis C₄-Alkylreste, bevorzugt einen Methylrest, steht,
n für 0, 1, 2 oder 3, bevorzugt 3 steht,
optional in Kombination ist mit einem weiteren aromatischen Homo- oder Copolycarbonat, enthaltend eine oder mehrere Monomereinheiten der allgemeinen Formel (2), 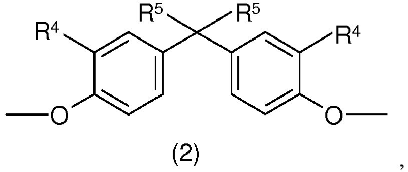 wobei
R⁴ für H, lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für H oder einen C₁-Alkylrest (Methylrest), steht, und
R⁵ für lineare oder verzweigte C₁- bis C₁₀-Alkylreste, bevorzugt lineare oder verzweigte C₁-bis C₆-Alkylreste, besonders bevorzugt für lineare oder verzweigte C₁- bis C₄-Alkylreste, ganz besonders bevorzugt für einen C₁-Alkylrest (Methylrest), steht;
und wobei das gegebenenfalls zusätzlich vorhandene weitere Homo- oder Copolycarbonat keine Monomereinheiten der Formel (1) aufweist.

Die Monomereinheit(en) der allgemeinen Formel (1) führt man über ein oder mehrere entsprechenden Diphenole der allgemeinen Formel (1') ein: 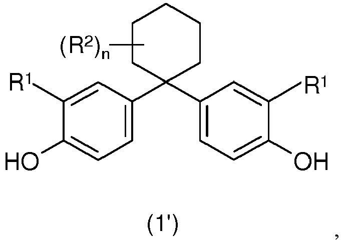 in der
R¹ für Wasserstoff oder einen C₁- bis C₄-Alkylrest, bevorzugt für Wasserstoff,
R² für einen C₁- bis C₄-Alkylrest, bevorzugt Methylrest, und
n für 0, 1, 2 oder 3, bevorzugt 3, stehen.

Die Diphenole der Formeln (1') und ihr Einsatz in Homopolycarbonaten sind beispielsweise aus DE 3918406 bekannt.

Besonders bevorzugt ist 1,1-Bis-(4-hydroxyphenyl)-3,3,5-trimethylcyclohexan (Bisphenol TMC) mit der Formel (1a):

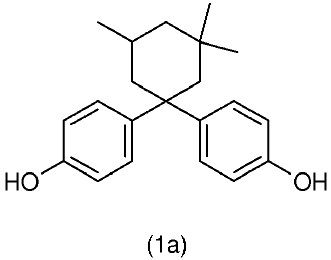

Neben einer oder mehreren Monomereinheiten der Formel (1) können in dem Copolycarbonat ein oder mehrere Monomereinheit(en) der Formel (3) enthalten sein: 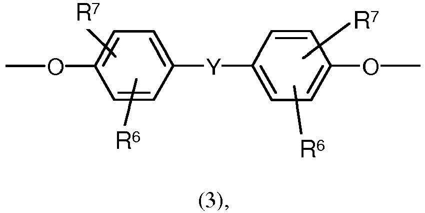 in der
R⁶ und R⁷ unabhängig voneinander für H, C₁- bis C₁₈-Alkyl-, C₁- bis C₁₈-Alkoxy, Halogen wie Cl oder Br oder für jeweils gegebenenfalls substituiertes Aryl oder Aralkyl, bevorzugt für H,
oder C₁- bis C₁₂-Alkyl, besonders bevorzugt für H oder C₁- bis C₈-Alkyl und ganz besonders bevorzugt für H oder Methyl, stehen, und
Y für eine Einfachbindung, -SO₂-, -CO-, -O-, -S-, C₁- bis C₆-Alkylen oder C₂- bis C₅-Alkyliden, ferner für C₆- bis C₁₂-Arylen, welches gegebenenfalls mit weiteren Heteroatome enthaltenden aromatischen Ringen kondensiert sein kann, steht.

Die Monomereinheit(en) der allgemeinen Formel (3) führt man über ein oder mehrere entsprechenden Diphenole der allgemeinen Formel (3a) ein: 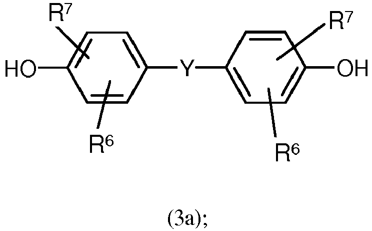 wobei R⁶, R⁷ und Y jeweils die bereits im Zusammenhang mit der Formel (3) erwähnte Bedeutung haben.

Ganz besonders bevorzugte Diphenole der Formel (3a) sind Diphenole der allgemeinen Formel (3b), 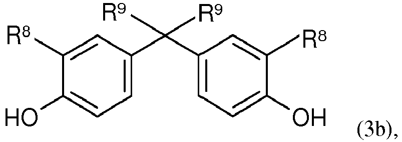
in der R⁸ für H, lineare oder verzweigte C₁- bis C₁₀ -Alkylreste, bevorzugt lineare oder verzweigte C₁- bis C₆ -Alkylreste, besonders bevorzugt für lineare oder verzweigte C₁- bis C₄-Alkylreste, ganz besonders bevorzugt für H oder einen C₁-Alkylrest (Methylrest) steht, und
in der R⁹ für lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für einen C₁-Alkylrest (Methylrest) steht.

Hierbei ist insbesondere das Diphenol (3c) ganz besonders bevorzugt.

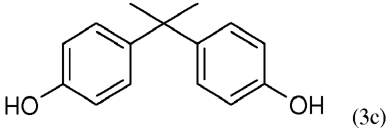

Die Diphenole der allgemeinen Formeln (3a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Gesamtanteil der Monomereinheiten der Formel (1) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (Summe Mole der Diphenole der Formel (1') bezogen auf die Summe der Mole aller eingesetzten Diphenole).

Copolycarbonate können als block- und statistische Copolycarbonate vorliegen. Besonders bevorzugt sind statistische Copolycarbonate. Dabei ergibt sich das Verhältnis der Häufigkeit der Diphenolat-Monomereinheiten im Copolycarbonat aus dem Molverhältnis der eingesetzten Diphenole.

Monomereinheiten der allgemeinen Formel (2) führt man über ein Diphenol der allgemeinen Formel (2a) ein: 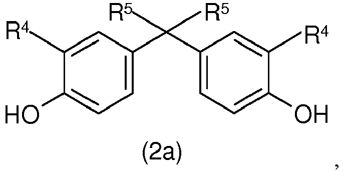
in der R⁴ für H, lineare oder verzweigte C₁- bis C₁₀-Alkylreste, bevorzugt lineare oder verzweigte C₁- bis C₆ -Alkylreste, besonders bevorzugt für lineare oder verzweigte C₁- bis C₄-Alkylreste, ganz besonders bevorzugt für H oder einen C₁-Alkylrest (Methylrest) steht und
in der R⁵ für lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für einen C₁-Alkylrest (Methylrest) steht.

Hierbei ist Bisphenol A ganz besonders bevorzugt.

Neben einer oder mehreren Monomereinheiten der allgemeinen Formeln (2) können in dem gegebenenfalls ferner vorhandenen Homo- oder Copolycarbonat ein oder mehrere Monomereinheiten der Formel (3) enthalten sein, wie sie bereits für das Copolycarbonat beschrieben sind.

Soweit die erfindungsgemäße Zusammensetzung Copolycarbonat, enthaltend Monomereinheiten der Formel (1), aufweist, so beträgt die Gesamtmenge an Copolycarbonat, enthaltend Monomereinheiten der Formel (1), in der Zusammensetzung vorzugsweise mindestens 3,0 Gew.-%, besonders bevorzugt mindestens 5,0 Gew.-%.

In einer bevorzugten Ausführungsform weist die erfindungsgemäße Zusammensetzung als Komponente A einen Blend aus dem Copolycarbonat, enthaltend die Monomereinheiten der Formel (1), und einem Bisphenol A basierten Homopolycarbonat auf.

Soweit die erfindungsgemäße Zusammensetzung Copolycarbonat, enthaltend Monomereinheiten der Formel (1), aufweist, beträgt der Gesamtanteil der Monomereinheiten der Formel (1) in der Komponente A vorzugsweise 0,1 - 88 mol-%, besonders bevorzugt 1 - 86 mol-%, ganz besonders bevorzugt 5 - 84 mol-% und insbesondere 10 - 82 mol-%, bezogen auf die Summe der Mole aller Monomereinheiten der Formeln (1) und (3) in den ein oder mehreren Polycarbonaten der Komponente A.

### Komponente B

Die erfindungsgemäßen Zusammensetzungen enthalten als Komponente B ein Gemisch, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol wobei als Komponente B eine Mischung vorliegt, welche durch Teilveresterung von Glycerol und/order Diglycerol mit einem Monocarbonsäuregemish, enthaltend zwei order mehr Monocarbonsäuregemisch mit einer Kettenlänge von 6 bis 30 C-Atomen, erhältlich ist,
und wobei das Monocarbonsäuregemisch Ölsäure enthält.

Die Ester des Glycerols leiten sich von der folgenden Grundstruktur ab:

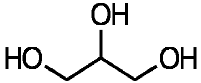

Isomere von Diglycerol, welche die Basis für die erfindungsgemäß eingesetzten Monocarbonsäureester bilden, sind die folgenden:

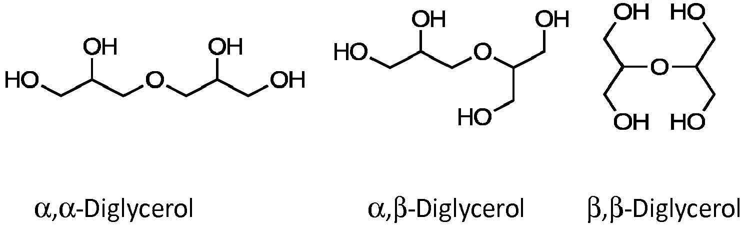

Für die erfindungsgemäß eingesetzten Ester des Diglycerols können solche Isomere dieser Formeln eingesetzt werden, die einfach oder mehrfach verestert sind.

Es können Gemische, enthaltend nur eine Monocarbonsäure und deren Ester, oder ein Gemisch, enthaltend zwei oder mehr Carbonsäuren und deren Ester, verwendet werden.

Geeignete Monocarbonsäuren sind beispielsweise Caprylsäure (C₇H₁₅COOH, Octansäure), Caprinsäure (C₉H₁₉COOH, Decansäure), Laurinsäure (C₁₁H₂₃COOH, Dodecansäure), Myristinsäure (C₁₃H₂₇COOH, Tetradecansäure), Palmitinsäure (C₁₅H₃₁COOH, Hexadecansäure), Margarinsäure (C₁₆H₃₃COOH, Heptadecansäure), Ölsäure (C₁₇H₃₃COOH, *cis*-9-Octadecensäure), Stearinsäure (C₁₇H₃₅COOH, Octadecansäure), Arachinsäure (C₁₉H₃₉COOH, Eicosansäure), Behensäure (C₂₁H₄₃COOH, Docosansäure), Lignocerinsäure (C₂₃H₄₇COOH, Tetracosansäure), Palmitoleinsäure (C₁₅H₂₉COOH, (9Z)-Hexadeca-9-ensäure), Petroselinsäure (C₁₇H₃₃COOH, (6Z)-Octadeca-6-ensäure), (9Z)-Octadeca-9-ensäure), Elaidinsäure (C₁₇H₃₃COOH, (9E)-Octadeca-9-ensäure), Linolsäure (C₁₇H₃₁COOH, (9Z,12Z)-Octadeca-9,12-diensäure), alpha- und gamma-Linolensäure (C₁₇H₂₉COOH, (9Z,12Z,15Z)-Octadeca-9,12,15-triensäure und (6Z,9Z,12Z)-Octadeca-6,9,12-triensäure), Arachidonsäure (C₁₉H₃₁COOH, (5Z,8Z,11Z,14Z)-Eicosa-5,8,11,14-tetraensäure), Timnodonsäure (C₁₉H₂₉COOH, (5Z,8Z,11Z,14Z,17Z)-Eicosa-5,8,11,14,17-pentaensäure) und Cervonsäure (C₂₁H₃₁COOH, (4Z,7Z,10Z,13Z,16Z,19Z)-Docosa-4,7,10,13,16,19-hexaensäure).

Besonders bevorzugt sind gesättigte aliphatische Monocarbonsäuren mit einer Kettenlänge von 8 bis 30 C-Atomen, besonders bevorzugt mit 12 bis 24 C-Atomen und ganz besonders bevorzugt mit 14 bis 24 C-Atomen.

Durch Teilveresterung von Glycerol und/oder Diglycerol mit einem Carbonsäuregemisch, enthaltend zwei oder mehr der Monocarbonsäuren mit einer Kettenlänge von 6 bis 30 C-Atomen resultiert ein Estergemisch. Das Carbonsäuregemisch enthält Ölsäure, besonders bevorzugt zusätzlich Stearinsäure und/oder Palmitinsäure. Vorzugsweise enthält Komponente B als Estergemisch Monoester und Diester der Ölsäure, der Palmitinsäure und/oder der Stearinsäure mit Glycerol und/oder Diglycerol und das Carbonsäuregemisch, d.h. die entsprechenden Carbonsäuren.

Beispiele sind Glycerolmonopalmitat, Glycerolmonooleat, Diglycerolmonopalmitat, Diglycerolmonooleat, Diglycerolmonostearat, Diglyceroldipalmitat oder Diglyceroldioleat. Der Anteil an Dieestern des Diglycerols ist bevorzugt kleiner als der Anteil der Monoester des Diglycerols. Komponente B enthält bevorzugt auch noch freies Glycerol und/oder Diglycerol. Komponente B kann aber auch so weit aufgereinigt sein, dass kein freies Glycerol und/oder Diglycerol mehr enthalten ist. Geeignete Mischungen sind z. B. von Palsgaard^{®} unter dem Handelsnamen Palsgaard^{®} Polymers PGE 8100 kommerziell erhältlich.

Die OH-Zahlen dieser Mischungen liegen vorzugsweise zwischen 180 und 300 mg KOH/g (Methode 2011-0232602-92D der Currenta GmbH & Co. OHG, Leverkusen). Die Säurezahlen dieser Mischungen liegen vorzugsweise zwischen 1 und 6 mg KOH/g (Methode 2011-0527602-14D der Currenta GmbH & Co. OHG, Leverkusen). Die Jodzahl der Mischungen nach Wijs beträgt vorzugsweise zwischen 40 und 80 g Jod/100g (Methode 2201-0152902-95D der Currenta GmbH & Co. OHG, Leverkusen).

Bevorzugt als Komponente B ist ein Gemisch mit einem Gehalt an freien Carbonsäuren von in Summe unter 3 Gew.-%, bezogen auf das Gesamtgewicht des Gemischs B, wobei die Ölsäure den größten Anteil stellt. Besonders bevorzugt beträgt der Gehalt an Ölsäure in dem Gemisch 1,5 bis 2,5 Gew.-%, insbesondere etwa 2 Gew.-%, bezogen auf das Gesamtgewicht des Gemischs B. Besonders bevorzugt bilden Ölsäureester des Glycerols und des Diglycerols die Hauptbestandteile der Esteranteile der Komponente B. In Summe beträgt ihr Anteil mehr als 50 Gew.-%, bezogen auf das Gesamtgewicht des Gemischs B.

Die Polycarbonatzusammensetzungen enthalten bevorzugt 0,05 bis 10,0 Gew.-%, weiter bevorzugt 0,1 bis 8,0 Gew.-%, noch weiter bevorzugt 0,2 bis 6,0 Gew.-% der Komponente B, noch weiter bevorzugt 0,2 Gew.-% bis 2,0 Gew.-%, weiter bevorzugt 0,2 Gew.-% bis 1,8 Gew.-%, ganz besonders bevorzugt 0,20 bis 1,0 Gew.-%, ganz besonders bevorzugt bis 0,8 Gew.-%, der Komponente B.

### Komponente C

Als Thermostabilisatoren werden bevorzugt Phosphor-Verbindungen mit der Oxidationszahl +III, insbesondere Phosphine und/oder Phosphite, eingesetzt.

Als Thermostabilisatoren eignen sich bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36). Sie werden allein oder im Gemisch (z. B. Irganox^{®} B900 (Gemisch aus Irgalos^{®} 168 und Irganox^{®} 1076 im Verhältnis 1:3) oder Doverphos^{®} S-9228 mit Irganox^{®} B900 bzw. Irganox^{®} 1076) eingesetzt. Die Thermostabilisatoren werden bevorzugt in Mengen von 0,003 bis 0,2 Gew.-% eingesetzt.

### Komponente D

Zusätzlich sind optional bis zu 6,0 Gew.-%, bevorzugt 0,01 bis 2,0 Gew.-% sonstige übliche Additive ("weitere Additive") enthalten. Die Gruppe der weiteren Additive umfasst keine Thermostabilisatoren, da diese bereits als Komponente C beschrieben sind.

Solche Additive, wie sie üblicherweise bei Polycarbonaten zugesetzt werden, sind insbesondere Antioxidantien, Entformungsmittel, Flammschutzmittel, UV-Absorber, IR-Absorber, Antistatika, optischen Aufheller, Lichtstreumittel, Farbmittel wie organische Pigmente, und/oder Additive zur Lasermarkierung, wie sie beispielsweise in EP-A 0 839 623, WO-A 96/15102, EP-A 0 500 496 oder "Plastics Additives Handbook", Hans Zweifel, 5th Edition 2000, Hanser Verlag, München beschrieben sind, in den für Polycarbonat üblichen Mengen. Diese Additive können einzeln oder auch im Gemisch zugesetzt werden.

Bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF, Ludwigshafen), 2-(2'-Hydroxy-5'-(tert.-octyl)-phenyl)-benzotriazol (Tinuvin^{®} 329, BASF, Ludwigshafen),), Bis-(3-(2H-benztriazolyl)-2-hydroxy-5-tert.-octyl)methan (Tinuvin^{®} 360, BASF, Ludwigshafen), 2-(4,6-Diphenyl-1,3,5-triazin-2-yl)-5-(hexyloxy)-phenol (Tinuvin^{®} 1577, BASF, Ludwigshafen), sowie Benzophenone wie 2,4-Dihydroxybenzophenon (Chimasorb^{®} 22 , BASF, Ludwigshafen) und 2-Hydroxy-4-(octyloxy)-benzophenon (Chimassorb^{®} 81, BASF, Ludwigshafen), 2,2-Bis[[(2-cyano-1-oxo-3,3-diphenyl-2-propenyl)oxy]-methyl]-1,3-propandiylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazine (Tinuvin^{®} 1600, BASF, Ludwigshafen), Tetraethyl-2,2'-(1,4-phenylen-dimethyliden)-bismalonat (Hostavin^{®} B-Cap, Clariant AG) oder N-(2-Ethoxyphenyl)-N'-(2-ethylphenyl)-ethandiamid (Tinuvin^{®} 312, CAS-Nr. 23949-66-8, BASF, Ludwigshafen).

Besonders bevorzugte spezielle UV-Stabilisatoren sind Tinuvin^{®} 360, Tinuvin^{®} 329 und/oder Tinuvin^{®} 312, ganz besonders bevorzugt sind Tinuvin^{®} 329 und Tinuvin^{®} 312.

Es können auch Mischungen dieser Ultraviolett-Absorber eingesetzt werden.

Bevorzugt enthält die Zusammensetzung Ultraviolett-Absorber in einer Menge bis 0,8 Gew.-%, bevorzugt 0,05 Gew.-% bis 0,5 Gew.-%, weiter bevorzugt 0,1 Gew.-% bis 0,4 Gew.-%, bezogen auf die Gesamtzusammensetzung.

Die erfindungsgemäßen Zusammensetzungen können auch Phosphate oder Sulfonsäureester als Umesterungsstabilisatoren enthalten. Bevorzugt ist Triisooctylphosphat als Umesterungsstabilisator enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.% bis 0,03 Gew.-% eingesetzt.

Die Zusammensetzung kann frei von Entformungsmitteln, z.B. Pentaerythrittetrastearat oder Glycerinmonostearat, sein.

Besonders bevorzugt ist mindestens ein Thermostabilisator (Komponente C) und gegebenenfalls als weiteres Additiv (Komponente D) ein Umesterungsstabilisator, insbesondere Triisooctylphosphat, oder ein UV-Absorber enthalten.

Als Additiv (Komponente D) kann in erfindungsgemäßen Zusammensetzungen auch ein Schlagzähmodifikator enthalten sein. Beispiele für Schlagzähmodifikatoren sind: Acrylat-core-shell-Systeme oder Butadienkautschuke (Paraloid-Typen von DOW Chemical Company); Olefin-Acrylat-Copolymere wie z. B. Elvaloy^{®}-Typen von DuPont; Siliconacrylatkautschuke wie z. B. die Metablen^{®}-Typen von Mitsubishi Rayon Co., Ltd.

Sofern die erfindungsgemäßen Zusammensetzungen transparent sein sollen, enthalten diese bevorzugt keine Mengen, die einen signifikanten Einfluss auf die Transparenz haben, an Additiv der folgenden Gruppe: Lichtstreumittel, anorganische Pigmente, Schlagzähmodifikatoren, weiter bevorzugt überhaupt kein Additiv aus dieser Gruppe. "Signifikanter Einfluss" bedeutet eine Menge an diesen Additiven, die dazu führt, dass die Transmission - Ty (D65 in 10° Beobachtung), bestimmt nach ISO 13468-2:2006 bei einer Dicke von 4 mm - gegenüber einer Zusammensetzung, welche diese Additive nicht enthält, sonst aber identisch ist, um mehr als 1% reduziert ist.

Die Herstellung der erfindungsgemäßen Zusammensetzungen, enthaltend die Komponenten A bis D, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis D verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis D der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis D, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Herstellung der Formteile erfolgt vorzugsweise durch Spritzguss, Extrusion oder aus Lösung in einem Gießprozess.

Die erfindungsgemäßen Zusammensetzungen sind zur Herstellung von Mehrschichtsystemen geeignet. Hierbei wird die Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die erfindungsgemäßen Zusammensetzungen sind zur Herstellung von Bauteilen im Automotive-Bereich, etwa für Blenden, Scheinwerferabdeckungen oder -rahmen, Linsen und Kollimatoren oder Lichtleiter sowie zur Herstellung von Rahmenbauteilen im EE (Elektro/Elektronik)- und IT-Bereich geeignet, insbesondere für Anwendungen, die hohe Anforderungen an die Fließfähigkeit stellen (Dünnschichtanwendungen). Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart-Meter-Gehäusebauteile.

Die Formkörper und Extrudate aus den erfindungsgemäßen Zusammensetzungen sowie Formteile, Extrudate und Mehrschichtsysteme, enthaltend die erfindungsgemäßen Zusammensetzungen, sind ebenfalls Gegenstand dieser Anmeldung.

Die erfindungsgemäßen Zusammensetzungen zeichnen sich insbesondere dadurch aus, dass sie aufgrund ihres Gehalts an Komponente B über ausgezeichnete rheologische und optische Eigenschaften verfügen. Sie eignen sich daher für die Herstellung von anspruchsvollen Spritzgussteilen, besonders für Dünnwandanwendungen, bei denen eine gute Fließfähigkeit erforderlich ist. Beispiele für derartige Anwendungen sind Ultrabook-Gehäuseteile, Laptop-Cover, Scheinwerferabdeckungen, LED-Anwendungen oder Bauteile für E/E-Anwendungen. Dünnwandanwendungen sind bevorzugt solche Anwendungen, bei denen Wandstärken von weniger als etwa 3 mm, bevorzugt weniger als 3 mm, weiter bevorzugt von weniger als 2,5 mm, noch weiter bevorzugt weniger als 2,0 mm, ganz besonders bevorzugt von weniger als 1,5 mm vorliegen. "Etwa" bedeutet hierbei, dass der tatsächliche Wert nicht wesentlich vom genannten Wert abweicht, wobei eine Abweichung von nicht größer als 25 %, bevorzugt nicht größer als 10 %, als "nicht wesentlich" gilt.

Ein weiterer Gegenstand der vorliegenden Erfindung ist daher auch die Verwendung eines Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol, wobei als Komponente B eine Mischung vorliegt, welche durch Teilveresterung von Glycerol und/order Diglycerol mit einem Monocarbonsäuregemish, enthaltend zwei order mehr Monocarbonsäuren mit einer Kettenlänge von 6 bis 30 C-Atomen, erhältlich ist,
und wobei das Monocarbonsäuregemisch Ölsäure enthält, zur Verbesserung der optischen Eigenschaften, insbesondere der visuellen Transmission, von Zusammensetzungen, umfassend aromatisches Polycarbonat (Komponente A), gegebenenfalls Thermostabilisator (Komponente C) und gegebenenfalls weitere Additive (Komponente D).

Die für die erfindungsgemäßen Zusammensetzungen vorstehend beschriebenen Ausführungsformen gelten - soweit anwendbar - auch für die erfindungsgemäße Verwendung.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonatzusammensetzungen wurden auf einem Extruder ZE 25 der Fa. Berstorff mit einem Durchsatz von 10 kg/h durch Compoundierung hergestellt. Die Schmelzetemperatur betrug 275 °C.
Komponente A-1: Lineares Polycarbonat auf Basis von Bisphenol A mit einer Schmelze-Volumenfließrate MVR von 12,5 cm³/(10 min) (gemäß ISO 1133:2012-03, bei einer Prüftemperatur 300°C und 1,2 kg Belastung), hergestellt durch Zugabe über einen Seitenextruder.
Komponente A-2: Lineares Polycarbonat in Pulverform auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung).
Komponente A-3: Copolycarbonat auf Basis von Bisphenol A und Bisphenol TMC mit einer Schmelze-Volumenfließrate MVR von 18 cm³/(10 min) (330°C/2,16 kg) und einer Erweichungstemperatur (VST/B 120) von 182°C von Covestro AG.
Komponente A-4: Lexan^{®} XHT 2141 von Sabic Innovative Plastics; Copolycarbonat auf Basis von Bisphenol A und Bisphenol der Formel (I), wobei R'= Phenyl ist. Die MVR beträgt 43 cm³/10 min (330°C, 2,16 kg), die Vicat-Temperatur (B50) liegt bei 160°C.
Komponente A-5: Lexan^{®} XHT 3141 von Sabic Innovative Plastics; Copolycarbonat auf Basis von Bisphenol A und Bisphenol der Formel (I), wobei R'= Phenyl ist. Die MVR beträgt 30 cm³/10 min (330°C, 2,16 kg), die Vicat-Temperatur (B50) liegt bei 168°C.
Komponente A-6: Copolycarbonat aus Bisphenol-A und Dihydroxydiphenyl mit einer Schmelze-Volumenfließrate MVR von 7 cm³/10 min (330°C, 2,16 kg).
Komponente A-7: Lineares Polycarbonat in Pulverform auf Basis von Bisphenol A mit einer Schmelze-Volumenfließrate MVR von 9,5 cm³/(10 min) (gemäß ISO 1133:2012-03, bei einer Prüftemperatur von 300°C und 1,2 kg Belastung).
Komponente B: Mischung; Palsgaard^{®} Polymers PGE 8100 der Fa. Palsgaard. Es handelt sich dabei um eine Mischung enthaltend die Ester Glycerinmonooleat (ca. 14 Gew.-%), Diglycerolmonooleat (ca. 45 Gew.-%), Diglyceroldioleat (ca. 14 Gew.-%). Die Mengen an freien Carbonsäuren in dem Gemisch betragen ca. 2 Gew.-% Ölsäure und weniger als jeweils 1 Gew.-% Stearinsäure und Palmitinsäure.
Komponente C: Triphenylphosphin (TPP) der Firma BASF SE als Thermostabilisator.
Komponente C-2: Irgafos^{®} P-EPQ der Firma BASF SE als Thermostabilisator.
Komponente D-1: Triisooctylphosphat (TOF) der Firma Lanxess AG als Umesterungsstabilisator.
Komponente D-2: Paraloid EXL 2300; Core-Shell Impact Modifier auf Acrylatbasis der Fa. Dow Chemical Company.

Bayblend T65: PC/ABS-Blend der Covestro Deutschland AG.

Bayblend FR3030: Flammgeschützter PC/ABS-Blend der Covestro Deutschland AG.

Die Vicat-Erweichungstemperatur VST/B50 bzw. VST/B 120 als Maß für die Wärmeformbeständigkeit wurde gemäß ISO 306:2014-3 an Prüfkörpern der Abmessung 80 mm x 10 mm x 4 mm mit einer Stempellast von 50 N und einer Aufheizgeschwindigkeit von 50°C/h bzw. 120°C/h mit dem Gerät Coesfeld Eco 2920 der Firma Coesfeld Materialtest bestimmt.

Die Bestimmung des Schmelze-Volumenfließrate (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR nach 20 Minuten Vorwärmzeit gemessen. Dies ist ein Maß für die Schmelzestabilität unter erhöhtem thermischem Stress.

Die Kerbschlagzähigkeit nach Charpy wurde nach ISO 7391-2:2006 an einseitig angespritzten Prüfstäben der Dimension 80 mm x 10 mm x 3 mm bei Raumtemperatur gemessen.

Die Schlagzähigkeit nach Charpy wurde nach ISO 7391-2:2006 an einseitig angespritzten Prüfstäben der Dimension 80 mm x 10 mm x 3 mm bei Raumtemperatur gemessen.

Die Bestimmung der Scherviskosität (Schmelzeviskosität) erfolgte in Anlehnung an ISO 11443:2005 mit dem Gerät Visco-Robo 45.00 der Fa. Göttfert.

Der Zug-E-Modul wurde gemäß ISO 527-1/-2:1996-04an einseitig angespritzten Schulterstäben mit einem Kern der Dimension 80 mm x 10 mm x 4 mm gemessen

Der Yellowness Index (Y.I.) wurde gemäß ASTM E 313-10 (Beobachter: 10° / Lichtart: D65) an Musterplatten mit einer Schichtdicke von 4 mm bestimmt.

Die Transmission im VIS-Bereich des Spektrum (400 nm bis 800 nm) wurde nach ISO 13468-2:2006 an Musterplatten mit einer Schichtdicke von 4 mm bestimmt.

Die Trübung wurde bestimmt nach ASTM D1003:2013 an Musterplatten mit einer Schichtdicke von 4 mm.

Fließwegbestimmung mittels Fließspirale: Bei der Fließspirale handelt es sich um eine spiralförmig angeordnete Kavität mit 2 mm Höhe und 8 mm Breite, in die die geschmolzene Masse bei einem vorher festgelegten Druck (hier: 1130 bar) eingespritzt wird. Man vergleicht den von den verschiedenen Proben erreichten Fließweg untereinander; je weiter, desto besser.

Zur Messung der Schmelzviskosität nach der Kegel-Platte Methode wurde das Gerät Rheometer MCR 301 mit dem Messkegel CP 25 verwendet und erfolgte nach ISO 11443:2014-04.

Die Reißdehnung wurde mittels Zugversuch gemäß DIN EN ISO 527-1/-2:1996 bestimmt.

Die Musterplatten wurden jeweils durch Spritzguss bei den in den nachfolgenden Tabellen angegebenen Massetemperaturen hergestellt.

### 2. Zusammensetzungen

**Tabelle 1: Erfindungsgemäße Zusammensetzungen 2 bis 6 und Vergleichsbeispiel 1**

| **Rezeptur** | | **1 (Vgl.)** | **2** | **3** | **4** | **5** | **6** |
|---|---|---|---|---|---|---|---|
| **Komponente A-1¹⁾** | Gew.-% | 93 | 93 | 93 | 93 | 93 | 93 |
| **Komponente A-2** | Gew.-% | 7 | 6,9 | 6,8 | 6,6 | 6,4 | 6,2 |
| **Komponente B** | Gew.-% | - | 0,1 | 0,2 | 0,4 | 0,6 | 0,8 |

| Prüfungen | | | | | | | |
|---|---|---|---|---|---|---|---|
| **MVR 7'/300 °C/1,2 kg** | ml/(10 min) | 12,2 | 14,3 | 18,4 | 28,1 | 39,9 | 51,6 |
| **MVR 20'/300 °C/1,2 kg** | ml/(10 min) | 12,6 | 14,3 | 18,6 | 29,8 | 39,7 | 51,4 |
| **Delta MVR 20'/MVR7'** | | 0,4 | 0,0 | 0,2 | 1,7 | -0,2 | -0,2 |
| **Vicat VSTB 50** | °C | 144,8 | 144,0 | 143,2 | 141,3 | 140,1 | 137,9 |

| **Kerbschlagzähigkeit** | | | | | | | |
|---|---|---|---|---|---|---|---|
| bei 23°C | kJ/m² | 63z* | 63z | 65z | 64z | 61z | 62z |
| bei 10°C | kJ/m² | - | - | - | - | 59z | 8x61z |
| | | | | | | | 2x19s ** |
| bei 0°C | kJ/m² | - | 59z | 59z | 60z | 5x57z | 2x58z |
| | | | | | | 5x19s | 8x17s |
| bei -10°C | kJ/m² | 58z | 8x57z | 3x59z | 2x56z | 2x57z | 15s |
| | | | 2x24s | 7x20s | 8x17s | 8x16s | |
| bei -20°C | kJ/m² | 7x57z | 17s | 16s | 15s | 1x43z | 13s |
| | | 3x21s | | | | 9x15s | |
| bei -30°C | kJ/m² | 17s | - | - | - | - | - |
| **Optik 4 mm, 300°C²⁾** | | | | | | | |
| **Transmission** | % | 89,06 | 89,14 | 88,92 | 89,00 | 88,87 | 88,97 |
| **Trübung** | % | 0,53 | 0,54 | 0,77 | 0,7 | 1,05 | 0,64 |
| **Y.I.** | | 2,64 | 2,53 | 2,75 | 2,71 | 2,73 | 2,8 |
| ¹⁾: enthält 250 ppm Triphenylphosphin als Komponente C; ²⁾: Massetemperatur im Spritzgussprozess bei der Herstellung der Prüfkörper; *: zäh; **: spröde | | | | | | | |

Aus Tabelle 1 ist zu erkennen, dass die erfindungsgemäßen Polycarbonatzusammensetzungen 2 bis 6 sehr gute Schmelzstabilitäten aufweisen, was die MVR-Werte nach 20 Minuten Verweilzeit zeigen. Das Vergleichsbeispiel 1, welches keine Komponente B enthält, weist dagegen deutlich schlechtere Schmelze-Volumenfließraten MVR auf als die erfindungsgemäßen Polycarbonatzusammensetzungen 2 bis 6.

**Tabelle 2: Erfindungsgemäße Zusammensetzungen 8 bis 10, zusätzlich enthaltend Triisooctylphosphat (D-1), und Vergleichsbeispiel 7**

| **Rezeptur:** | | **7 (Vgl.)** | **8** | **9** | **10** |
|---|---|---|---|---|---|
| **Komponente A-1¹⁾** | Gew.-% | 93 | 93 | 93 | 93 |
| **Komponente A-2** | Gew.-% | 6,99 | 6,59 | 6,39 | 6,19 |
| **Komponente B** | Gew.-% | - | 0,4 | 0,6 | 0,8 |
| **Komponente D-1** | Gew.-% | 0,01 | 0,01 | 0,01 | 0,01 |

| **Prüfungen** | | | | | |
|---|---|---|---|---|---|
| **MVR 7'/300 °C/1,2 kg** | ml/(10 min) | 12,0 | 22,4 | 42,7 | 44,6 |
| **MVR 20'/300 °C/1,2 kg** | ml/(10 min) | 12,3 | 24,4 | 42,3 | 43,4 |

| **Rezeptur:** | | **7 (Vgl.)** | **8** | **9** | **10** |
|---|---|---|---|---|---|
| **Delta MVR 20'/MVR7'** | | 0,3 | 2,0 | -0,4 | -1,2 |
| **Vicat VSTB 50** | °C | 144,9 | 141,1 | 138,1 | 136,3 |
| **Kerbschlagzähigkeit** | | | | | |
| bei 23°C | kJ/m² | 65z* | 66z | 66z | 55z |
| bei 10°C | kJ/m² | - | - | - | 52z |
| bei 0°C | kJ/m² | - | 59z | 59z | 14s** |
| bei -10°C | kJ/m² | 59z | 6x57z | | - |
| | | | 4x18s | 15s | |
| **Schlagzähigkeit** | kJ/m² | n.g. | n.g. | n.g. | n.g. |

| **Optik 4 mm, 300°C²⁾** | | | | | |
|---|---|---|---|---|---|
| **Transmission** | % | 89,01 | 89,35 | 89,23 | 89,34 |
| **Trübung** | % | 0,35 | 0,31 | 0,42 | 0,25 |
| **Y.I.** | | 2,50 | 2,34 | 2,53 | 2,61 |
| ¹⁾: enthält 250 ppm Triphenylphosphin als Komponente C; ²⁾: Massetemperatur im Spritzgussprozess bei der Herstellung der Prüfkörper; n.g.: nicht gebrochen (kein Wert, da kein Bruch); *: zäh; **: spröde | | | | | |

Die erfindungsgemäßen Zusammensetzungen 8 bis 10, die Komponente B enthalten, zeigen eine deutliche Verbesserung des Schmelze-Volumenfließraten MVR gegenüber dem Vergleichsbeispiel 7. Überraschenderweise wurden bei der Kombination mit Triisooctylphosphat auch die optischen Eigenschaften signifikant verbessert, was sich in der erhöhten Transmission widerspiegelt.

Die erfindungsgemäßen Polycarbonatzusammensetzungen 8 bis 10 weisen zudem sehr gute Schmelzstabilitäten auf, was die MVR-Werte nach 20 Minuten Verweilzeit zeigen.

**Tabelle 3: Erfindungsgemäße Zusammensetzungen 12 bis 14, zusätzlich enthalten Triisooctylphosphat, und Vergleichsbeispiel 11**

| **Rezeptur** | | **11 (Vgl.)** | **12** | **13** | **14** |
|---|---|---|---|---|---|
| **Komponente A-3¹⁾** | Gew.-% | 93,00 | 93,00 | 93,00 | 93,00 |
| **Komponente A-2** | Gew.-% | 7,00 | 6,89 | 6,79 | 6,59 |
| **Komponente B** | Gew.-% | - | 0,10 | 0,20 | 0,40 |
| **Komponente D-1** | Gew.-% | - | 0,01 | 0,01 | 0,01 |

| **Prüfungen:** | | | | | |
|---|---|---|---|---|---|
| **etaᵣₑₗ Granulat** | | 1,256 | 1,255 | 1,254 | 1,252 |
| **MVR 330°C/2,16 kg** | ml/(10 min) | 17,8 | 17,2 | 21,1 | 44,4 |
| **Fließspirale (1130 bar)** | cm | 25* | 25,5 | 26,3 | 29,5 |

| **Schmelzevisk. bei 300°C** | | | | | |
|---|---|---|---|---|---|
| eta 50 | Pa · s | 1345 | 1320 | 1255 | 1128 |
| eta 100 | Pa · s | 1272 | 1252 | 1195 | 1081 |
| eta 200 | Pa · s | 1129 | 1123 | 1061 | 970 |
| eta 500 | Pa · s | 811 | 818 | 772 | 729 |
| eta 1000 | Pa · s | 566 | 571 | 538 | 516 |
| eta 1500 | Pa · s | 447 | 450 | 426 | 410 |
| eta 5000 | Pa · s | 185 | 212 | 170 | 192 |

| **Schmelzevisk. bei 320°C** | | | | | |
|---|---|---|---|---|---|
| eta 50 | Pa · s | 756 | 698 | 676 | 513 |
| eta 100 | Pa · s | 734 | 676 | 638 | 498 |
| eta 200 | Pa · s | 690 | 632 | 596 | 469 |
| eta 500 | Pa · s | 549 | 510 | 483 | 394 |
| eta 1000 | Pa · s | 409 | 385 | 366 | 311 |
| eta 1500 | Pa · s | 326 | 311 | 299 | 259 |
| eta 5000 | Pa · s | 150 | 143 | 137 | 123 |

| **Schmelzevisk. bei 330°C** | | | | | |
|---|---|---|---|---|---|
| eta 50 | Pa s | 500 | 456 | 447 | 279 |
| eta 100 | Pa · s | 498 | 446 | 438 | 278 |
| eta 200 | Pa · s | 474 | 433 | 419 | 277 |
| eta 500 | Pa s | 400 | 370 | 360 | 254 |
| eta 1000 | Pa · s | 316 | 297 | 291 | 219 |
| eta 1500 | Pa · s | 262 | 248 | 244 | 189 |
| eta 5000 | Pa · s | 127 | 121 | 120 | 102 |

| **Schmelzevisk. bei 340°C** | | | | | |
|---|---|---|---|---|---|
| eta 50 | Pa · s | 368 | 326 | 305 | 169 |
| eta 100 | Pa · s | 365 | 322 | 300 | 168 |
| eta 200 | Pa · s | 355 | 313 | 295 | 167 |
| eta 500 | Pa · s | 310 | 279 | 263 | 158 |
| eta 1000 | Pa · s | 257 | 232 | 221 | 141 |
| eta 1500 | Pa · s | 219 | 201 | 192 | 131 |
| eta 5000 | Pa · s | 111 | 105 | 101 | 79 |

| **Schmelzevlsk. bei 360°C** | | | | | |
|---|---|---|---|---|---|
| eta 50 | Pa · s | 199 | 162 | 146 | 66 |
| eta 100 | Pa · s | 196 | 159 | 144 | 65 |
| eta 200 | Pa · s | 190 | 154 | 140 | 64 |
| eta 500 | Pa · s | 178 | 149 | 132 | 62 |
| eta 1000 | Pa · s | 158 | 135 | 121 | 60 |
| eta 1500 | Pa · s | 141 | 122 | 111 | 58 |
| eta 5000 | Pa · s | 84 | 74 | 70 | 45 |
| **Vicat VSTB 120** | °C | 180,9 | 180,3 | 178,7 | 176,6 |

| **Zug** | | | | | |
|---|---|---|---|---|---|
| **Streckspannung** | N/mm² | 72 | 73 | 74 | 75 |
| **Streckdehnung** | % | 6,8 | 6,7 | 6,6 | 6,5 |
| **Reiß festigkeit** | N/mm² | 64 | 72 | 70 | 73 |
| **Reißdehnung** | % | 84 | 126 | 118 | 129 |
| **E-Modul** | N/mm² | 2357 | 2381 | 2438 | 2457 |
| | | | | | |

| **Optische Daten** | | | | | |
|---|---|---|---|---|---|
| **4 mm, 330°C²⁾** | | | | | |
| **Transmission** | % | 88,94 | 89,35 | 89,62 | 89,64 |
| **Trübung** | % | 0,44 | 0,3 | 0,3 | 0,28 |
| **Y.I.** | | 3,39 | 2,95 | 2,63 | 2,46 |
| ¹⁾: enthält 250 ppm Triphenylphosphin als Komponente C; ²⁾: Massetemperatur im Spritzgussprozess bei der Herstellung der Prüfkörper. | | | | | |

Die erfindungsgemäßen Beispiele 12 bis 14, die Komponente B und Komponente D, also Triisooctylphosphat, enthalten, zeigen gegenüber dem Vergleichsbeispiel 11 deutlich reduzierte Schmelzviskositäten bei allen gemessenen Scherraten und Temperaturen. Die optischen Eigenschaften Transmission, Trübung und Yellowness-Index sind signifikant verbessert. Gleichzeitig stellt man eine Erhöhung des E-Moduls fest.

**Tabelle 4: Erfindungsgemäße Beispiele 16, 17, 19 und 20 sowie Vergleichsbeispiele 15 und 18**

| **Rezeptur:** | | **15 (Vgl.)** | **16** | **17** | **18 (Vgl.)** | **19** | **20** |
|---|---|---|---|---|---|---|---|
| **Komponente A-4** | Gew.-% | 100 | 99,8 | 99,6 | | | |
| **Komponente A-5** | Gew.-% | | | | 100 | 99,8 | 99,6 |
| **Komponente B** | Gew.-% | | 0,2 | 0,4 | | 0,2 | 0,4 |

| **Prüfungen** | | | | | | | |
|---|---|---|---|---|---|---|---|
| Rheologie Kegel/Platte | | | | | | | |

| **Schmelzevisk. bei 260°C** | | | | | | | |
|---|---|---|---|---|---|---|---|
| eta 471 | Pa · s | 1020 | 601 | 681 | 856 | 557 | 559 |
| eta 329 | Pa · s | 1220 | 775 | 842 | 1020 | 697 | 640 |
| eta 229 | Pa · s | 1450 | 976 | 996 | 1190 | 838 | 719 |
| eta 160 | Pa · s | 1690 | 1200 | 1140 | 1370 | 962 | 791 |
| eta 112 | Pa · s | 1950 | 1420 | 1280 | 1540 | 1080 | 856 |
| eta 77,8 | Pa · s | 2210 | 1620 | 1400 | 1710 | 1170 | 913 |
| eta 54,3 | Pa · s | 2470 | 1770 | 1500 | 1880 | 1240 | 960 |
| eta 37,9 | Pa · s | 2720 | 1890 | 1590 | 2020 | 1300 | 997 |
| eta 26,4 | Pa · s | 2940 | 2000 | 1670 | 2150 | 1350 | 1030 |
| eta 18,4 | Pa · s | 3140 | 2080 | 1720 | 2250 | 1390 | 1050 |
| eta 12,9 | Pa · s | 3310 | 2150 | 1770 | 2340 | 1410 | 1060 |
| eta 8,97 | Pa · s | 3450 | 2200 | 1800 | 2400 | 1430 | 1070 |
| eta 6,25 | Pa · s | 3550 | 2230 | 1820 | 2450 | 1440 | 1080 |
| eta 4,36 | Pa · s | 3630 | 2250 | 1830 | 2480 | 1450 | 1080 |
| eta 3,04 | Pa · s | 3690 | 2270 | 1840 | 2500 | 1450 | 1080 |
| eta 2,12 | Pa · s | 3720 | 2280 | 1840 | 2520 | 1450 | 1080 |
| eta 1,48 | Pa · s | 3750 | 2280 | 1840 | 2530 | 1450 | 1080 |
| eta 1,03 | Pa · s | 3770 | 2280 | 1830 | 2540 | 1450 | 1080 |
| eta 0,721 | Pa · s | 3780 | 2280 | 1830 | 2550 | 1450 | 1070 |
| eta 0,503 | Pa · s | 3780 | 2260 | 1810 | 2550 | 1440 | 1070 |

| **Schmelzevisk. bei 280°C** | | | | | | | |
|---|---|---|---|---|---|---|---|
| eta 471 | Pa · s | 466 | 435 | 343 | 568 | 362 | 326 |
| eta 329 | Pa · s | 581 | 484 | 381 | 651 | 409 | 356 |
| eta 229 | Pa · s | 704 | 531 | 419 | 729 | 476 | 382 |
| eta 160 | Pa · s | 808 | 574 | 453 | 799 | 529 | 404 |
| eta 112 | Pa · s | 896 | 610 | 482 | 860 | 560 | 422 |
| eta 77,8 | Pa · s | 966 | 640 | 506 | 912 | 583 | 436 |
| eta 54,3 | Pa · s | 1030 | 663 | 525 | 955 | 601 | 446 |
| eta 37,9 | Pa · s | 1080 | 680 | 539 | 989 | 614 | 454 |
| eta 26,4 | Pa · s | 1120 | 693 | 550 | 1020 | 623 | 459 |
| eta 18,4 | Pa · s | 1150 | 700 | 556 | 1030 | 629 | 462 |
| eta 12,9 | Pa · s | 1170 | 703 | 560 | 1050 | 632 | 463 |
| eta 8,97 | Pa · s | 1180 | 704 | 562 | 1060 | 634 | 464 |
| eta 6,25 | Pa · s | 1190 | 703 | 563 | 1060 | 636 | 465 |
| eta 4,36 | Pa · s | 1200 | 701 | 563 | 1060 | 636 | 465 |
| eta 3,04 | Pa · s | 1200 | 699 | 564 | 1070 | 636 | 465 |
| eta 2,12 | Pa · s | 1200 | 694 | 563 | 1070 | 635 | 465 |
| eta 1,48 | Pa · s | 1200 | 689 | 564 | 1070 | 635 | 465 |
| eta 1,03 | Pa · s | 1210 | 683 | 565 | 1070 | 635 | 465 |
| eta 0,721 | Pa · s | 1210 | 676 | 568 | 1070 | 634 | 466 |
| eta 0,503 | Pa · s | 1200 | 665 | 572 | 1070 | 631 | 467 |

| **Schmelzevisk. bei 300°C** | | | | | | | |
|---|---|---|---|---|---|---|---|
| eta 471 | Pa · s | 397 | 266 | 232 | 329 | 197 | 148 |
| eta 329 | Pa · s | 434 | 285 | 248 | 357 | 208 | 156 |
| eta 229 | Pa · s | 469 | 303 | 262 | 383 | 217 | 162 |
| eta 160 | Pa · s | 498 | 318 | 273 | 405 | 225 | 167 |
| eta 112 | Pa · s | 523 | 330 | 282 | 422 | 230 | 171 |
| eta 77,8 | Pa · s | 543 | 339 | 288 | 436 | 234 | 174 |
| eta 54,3 | Pa · s | 557 | 345 | 292 | 446 | 236 | 176 |
| eta 37,9 | Pa · s | 567 | 349 | 295 | 453 | 238 | 177 |
| eta 26,4 | Pa · s | 575 | 352 | 297 | 458 | 238 | 177 |
| eta 18,4 | Pa · s | 579 | 353 | 298 | 461 | 238 | 177 |
| eta 12,9 | Pa · s | 582 | 354 | 298 | 463 | 238 | 178 |
| eta 8,97 | Pa · s | 583 | 354 | 298 | 464 | 238 | 178 |
| eta 6,25 | Pa · s | 584 | 354 | 298 | 464 | 238 | 178 |
| eta 4,36 | Pa · s | 585 | 353 | 299 | 465 | 237 | 178 |
| eta 3,04 | Pa · s | 585 | 353 | 299 | 465 | 237 | 179 |
| eta 2,12 | Pa · s | 585 | 353 | 300 | 465 | 236 | 179 |
| eta 1,48 | Pa · s | 586 | 353 | 302 | 466 | 236 | 181 |
| eta 1,03 | Pa · s | 586 | 353 | 304 | 466 | 235 | 183 |
| eta 0,721 | Pa · s | 588 | 353 | 308 | 466 | 235 | 187 |
| eta 0,503 | Pa · s | 589 | 353 | 313 | 465 | 234 | 193 |
| **Mₙ** | g/mol | 8960 | 8487 | 8498 | 9085 | 8882 | 9017 |
| **M_{w}** | g/mol | 21042 | 20665 | 20437 | 22490 | 22136 | 22053 |
| **T_{G}** | °C | 172,5 | 169,2 | 167,8 | 163,0 | 160,6 | 160,0 |

Die erfindungsgemäßen Beispiele 16 und 17 bzw. 19 und 20 zeigen gegenüber den Vergleichsbeispielen 15 bzw. 18 deutlich reduzierte Schmelzviskositäten bei allen gemessenen Scherraten und Temperaturen.

**Tabelle 5: Erfindungsgemäße Beispiele 22 bis 26 und Vergleichsbeispiel 21**

| **Rezeptur:** | | **21 (Vgl.)** | **22** | **23** | **24** | **25** | **26** |
|---|---|---|---|---|---|---|---|
| **Komponent A-6** | Gew.-% | 93 | 93 | 93 | 93 | 93 | 93 |
| **Komponente A-2** | Gew.-% | 7 | 6,9 | 6,8 | 6,6 | 6,4 | 6,2 |
| **Komponente B** | Gew.-% | - | 0,1 | 0,2 | 0,4 | 0,6 | 0,8 |

| **Prüfungen** | | | | | | | |
|---|---|---|---|---|---|---|---|
| **MVR 7' kg** | ml/(10 min) | 7,6 | 7,9 | 8,1 | 8,5 | 9,1 | 10,2 |
| **MVR 20' kg** | ml/(10 min) | 7,9 | 7,9 | 8,5 | 9,5 | 10,8 | 12,6 |
| **Delta MVR 20'/MVR 7'** | | 0,3 | 0,0 | 0,4 | 1,0 | 1,7 | 2,4 |
| **Vicat** | °C | 153,3 | 152,3 | 151 | 149,6 | 147,8 | 146,2 |
| **Schmelzeviskosität bei 280°C** eta 50 | Pa · s | 1150 | 1063 | 1053 | 1069 | 995 | 933 |
| eta 100 | Pa · s | 1114 | 1035 | 1030 | 1039 | 970 | 907 |
| eta 200 | Pa · s | 1033 | 960 | 949 | 963 | 908 | 847 |
| eta 500 | Pa · s | 785 | 753 | 739 | 756 | 718 | 674 |
| eta 1000 | Pa · s | 549 | 534 | 524 | 534 | 513 | 488 |
| eta 1500 | Pa · s | 423 | 413 | 406 | 413 | 398 | 384 |
| eta 5000 | Pa · s | 180 | 177 | 175 | 176 | 172 | 166 |

| **Schmelzeviskosität bei 300°C** | | | | | | | |
|---|---|---|---|---|---|---|---|
| eta 50 | Pa · s | | | | 530 | 422 | 423 |
| eta 100 | Pa · s | | | | 513 | 420 | 419 |
| eta 200 | Pa · s | | | | 484 | 416 | 417 |
| eta 500 | Pa · s | | | | 430 | 377 | 377 |
| eta 1000 | Pa · s | | | | 350 | 315 | 313 |
| eta 1500 | Pa · s | | | | 290 | 269 | 265 |
| eta 5000 | Pa · s | | | | 138 | 130 | 129 |

| **Schmelzeviskosität bei 320°C** | | | | | | | |
|---|---|---|---|---|---|---|---|
| eta 50 | Pa · s | | | | 312 | 292 | 231 |
| eta 100 | Pa · s | | | | 300 | 282 | 230 |
| eta 200 | Pa · s | | | | 291 | 271 | 229 |
| eta 500 | Pa · s | | | | 273 | 253 | 219 |
| eta 1000 | Pa · s | | | | 239 | 222 | 197 |
| eta 1500 | Pa · s | | | | 211 | 197 | 173 |
| eta 5000 | Pa · s | | | | 115 | 109 | 102 |

| **Kerbschlagzähigkeit** | | | | | | | |
|---|---|---|---|---|---|---|---|
| RT | kJ/m² | 50z | 50z | 53z | 51z | 68z | 51z |
| -20°C | kJ/m² | 45z | 45z | 45z | 45z | 46z | 45z |
| -40°C | kJ/m² | 44z | 38z | 40z | 40z | 44z | 40z |
| -50°C | kJ/m² | 8x34z* | 8x34z | 9x33z | 8x34z | 9x35z | 5x33z |
| | | 2x29s** | 2x29s | 1x30s | 2x29s | 1x29s | 5x28s |

| **Optik 4 mm, 300°C¹⁾** | | | | | | | |
|---|---|---|---|---|---|---|---|
| **Transmission** | % | 87,43 | 87,35 | 87,60 | 87,41 | 87,41 | 87,39 |
| **Y.I.** | | 5,32 | 5,56 | 4,81 | 4,98 | 4,96 | 4,79 |

| **Optik 4 mm, 320°C** | | | | | | | |
|---|---|---|---|---|---|---|---|
| **Transmission** | % | 87,57 | 87,51 | 87,70 | 87,58 | 87,51 | 87,47 |
| **Y.I.** | | 5,22 | 5,20 | 4,59 | 4,71 | 4,74 | 4,75 |
| ¹⁾: Massetemperatur im Spritzgussprozess bei der Herstellung der Prüfkörper; *: zäh; **: spröde | | | | | | | |

Die erfindungsgemäßen Beispiele 22 bis 26 zeigen gegenüber dem Vergleichsbeispiel 21 deutlich reduzierte Schmelzeviskositäten bei allen gemessenen Scherraten und Temperaturen. Die gute Tieftemperaturzähigkeit bleibt erhalten, der Yellowness Index ist reduziert.

**Tabelle 6: Erfindungsgemäße Beispiele 28 bis 30 und Vergleichsbeispiel 27**

| **Rezeptur** | | **27 (Vgl.)** | **28** | **29** | **30** |
|---|---|---|---|---|---|
| **Komponente A-7** | Gew.-% | 93,00 | 93,00 | 93,00 | 93,00 |
| **Komponente A-2** | Gew.-% | 2,89 | 2,79 | 2,69 | 2,59 |
| **Komponente C-2** | Gew.-% | 0,10 | 0,10 | 0,10 | 0,10 |
| **Komponente D-2** | Gew.-% | 4,00 | 4,00 | 4,00 | 4,00 |
| **Komponente B** | Gew.-% | | 0,1 | 0,2 | 0,3 |
| **Komponente D-1** | Gew.-% | 0,01 | 0,01 | 0,01 | 0,01 |
| **MVR** | ml/(10 min) | 8,3 | 9,2 | 14,4 | 20,2 |
| **IMVR20'** | ml/(10 min) | 9,2 | 10 | 16,5 | 22,6 |
| **Delta MVR/IMVR20'** | | **0,9** | **0,8** | **2,1** | **2,4** |
| **Vicat** | °C | 144,5 | 144,5 | 143,1 | 142,0 |

| **Schmelzevisk. bei 280°C** | | | | | |
|---|---|---|---|---|---|
| eta 50 | Pa · s | 1015 | 976 | 871 | 788 |
| eta 100 | Pa · s | 964 | 929 | 845 | 748 |
| eta 200 | Pa · s | 873 | 842 | 765 | 685 |
| eta 500 | Pa · s | 673 | 651 | 609 | 544 |
| eta 1000 | Pa · s | 487 | 473 | 449 | 408 |
| eta 1500 | Pa · s | 383 | 372 | 357 | 327 |
| eta 5000 | Pa · s | 168 | 165 | 159 | 151 |

| **Schmelzevisk. bei 300°C** | | | | | |
|---|---|---|---|---|---|
| eta 50 | Pa · s | 502 | 486 | 439 | 386 |
| eta 100 | Pa · s | 491 | 476 | 430 | 377 |
| eta 200 | Pa · s | 469 | 455 | 408 | 367 |
| eta 500 | Pa · s | 400 | 390 | 351 | 317 |
| eta 1000 | Pa · s | 321 | 316 | 287 | 264 |
| eta 1500 | Pa · s | 268 | 266 | 250 | 227 |
| eta 5000 | Pa · s | 129 | 129 | 125 | 117 |

| **Schmelzevisk. bei 320°C** | | | | | |
|---|---|---|---|---|---|
| eta 50 | Pa · s | 293 | 291 | 268 | 224 |
| eta 100 | Pa · s | 289 | 289 | 264 | 219 |
| eta 200 | Pa · s | 284 | 286 | 260 | 210 |
| eta 500 | Pa · s | 252 | 256 | 235 | 192 |
| eta 1000 | Pa · s | 215 | 218 | 202 | 169 |
| eta 1500 | Pa · s | 189 | 191 | 178 | 154 |
| eta 5000 | Pa · s | 103 | 105 | 101 | 90 |

| **Kerbschlagzähigkeit** | | | | | |
|---|---|---|---|---|---|
| 23°C | kJ/m² | 63z | 64z | 63z | 64z |
| -20°C | kJ/m² | 58z | 58z | 57z | 57z |
| -30°C | kJ/m² | 56z | 56z | 56z | 54z |
| -40°C | kJ/m² | 20s | 20s | 20s | 19s |

Die erfindungsgemäßen Beispiele 28 bis 30 zeigen gegenüber dem Vergleichsbeispiel 27 deutlich reduzierte Schmelzviskositäten bei allen gemessenen Scherraten und Temperaturen. Die gute Tieftemperaturzähigkeit bleibt erhalten.

**Tabelle 7: Erfindungsgemäße Beispiele 32 bis 34, 36 bis 38 und Vergleichsbeispiele 31 und 35**

| **Rezeptur** | | **31 (Vgl.)** | **32** | **33** | **34** | **35 (Vgl.)** | **36** | **37** | **38** |
|---|---|---|---|---|---|---|---|---|---|
| **Bayblend T65** | Gew.-% | 100,00 | 99,80 | 99,60 | 99,40 | | | | |
| **Bayblend** FR3030 | Gew.-% | | | | | 100,00 | 99,80 | 99,60 | 99,40 |
| **Komponente B** | Gew.-% | | 0,20 | 0,40 | 0,60 | | 0,20 | 0,40 | 0,60 |
| | | | | | | | | | |

| **Prüfungen** | | | | | | | | | |
|---|---|---|---|---|---|---|---|---|---|
| **MVR 260°C/5 kg** | ml/(10 min) | 14,5 | 14,8 | 16,9 | 18,4 | 4,2 | 4,5 | 4,8 | 5,3 |
| **IMVR20'260°C/5 kg** | ml/(10 min) | 12,5 | 14,0 | 17,8 | 21,1 | 4,1 | 4,5 | 4,9 | 5,1 |
| **Delta MVR/MVR20' 260°C/5 kg** | | -2,0 | -0,8 | 0,9 | 2,7 | -0,1 | 0,0 | 0,1 | -0,2 |
| **Vicat VSTB 120** | °C | 115,7 | 115,2 | 113,7 | 113,3 | 113,5 | 112,4 | 111 | 110,6 |

| **Schmelzevisk. bei 260°C** | | | | | | | | | |
|---|---|---|---|---|---|---|---|---|---|
| eta 50 | Pa · s | 923 | 914 | 844 | 804 | 1545 | 1483 | 1419 | 1406 |
| eta 100 | Pa · s | 724 | 717 | 667 | 639 | 1232 | 1182 | 1145 | 1129 |
| eta 200 | Pa · s | 542 | 541 | 506 | 485 | 967 | 927 | 892 | 886 |
| eta 500 | Pa · s | 336 | 333 | 313 | 308 | 641 | 625 | 597 | 601 |
| eta 1000 | Pa · s | 219 | 220 | 206 | 205 | 438 | 424 | 407 | 411 |
| eta 1500 | Pa · s | 167 | 168 | 158 | 158 | 338 | 328 | 313 | 318 |
| eta 5000 | Pa · s | 74 | 75 | 71 | 71 | 143 | 140 | 135 | 137 |

| **Schmelzevisk. bei 280°C** | | | | | | | | | |
|---|---|---|---|---|---|---|---|---|---|
| eta 50 | Pa · s | 550 | 501 | 437 | 379 | - | - | - | - |
| eta 100 | Pa · s | 437 | 410 | 371 | 355 | - | - | - | - |
| eta 200 | Pa · s | 341 | 328 | 296 | 285 | - | - | - | - |
| eta 500 | Pa · s | 230 | 224 | 206 | 200 | - | - | - | - |
| eta 1000 | Pa · s | 158 | 157 | 146 | 140 | - | - | - | - |
| eta 1500 | Pa · s | 124 | 123 | 115 | 112 | - | - | - | - |
| eta 5000 | Pa · s | 56 | 56 | 53 | 51 | - | - | - | - |

| **Schmelzevisk. bei 300°C** | | | | | | | | | |
|---|---|---|---|---|---|---|---|---|---|
| eta 50 | Pa · s | 302 | 278 | 236 | 229 | - | - | - | - |
| eta 100 | Pa · s | 234 | 229 | 192 | 184 | - | - | - | - |
| eta 200 | Pa · s | 200 | 184 | 158 | 148 | - | - | - | - |
| eta 500 | Pa · s | 146 | 136 | 118 | 112 | - | - | - | - |
| eta 1000 | Pa · s | 107 | 102 | 93 | 88 | - | - | - | - |
| eta 1500 | Pa · s | 88 | 85 | 77 | 75 | - | - | - | - |
| eta 5000 | Pa · s | 44 | 43 | 40 | 39 | - | - | - | - |

| **Kerbschlagzähigkeit** | | | | | | | | | |
|---|---|---|---|---|---|---|---|---|---|
| **25°C** | kJ/m² | 82z | 61z | 61z | 66z | 49z | 49z | 46z | 43z |
| **10°C** | kJ/m² | | | | | 35z | 34z | 23s | 18s |
| **0°C** | kJ/m² | | | | | 17s | 17s | 16s | 15s |
| **-10°C** | kJ/m² | | | | | | | | |
| **-20°C** | kJ/m² | 100z | 81z | 63z | 80z | 13s | 13s | | |
| **-30°C** | kJ/m² | | | | | | | | |
| **-40°C** | kJ/m² | 92z | 99z | 107z | 87z | | | | |
| **-50°C** | kJ/m² | 3x36z | 3x34z | 2x37z | 4x37z | | | | |
| | | 7x23s | 7x24s | 8x23s | 6x23s | | | | |
| **-60°C** | kJ/m² | 20s | 21s | 20s | 19s | | | | |

Die erfindungsgemäßen Beispiele 32 bis 34 bzw. 36 bis 38 zeigen gegenüber den Vergleichsbeispielen 31 bzw. 35 reduzierte Schmelzeviskositäten bei allen gemessenen Scherraten und Temperaturen. Die gute Tieftemperaturzähigkeit bleibt erhalten.

## Patentansprüche

1. Zusammensetzung enthaltend
A) 20,0 Gew.-% bis 99,95 Gew.-% aromatisches Polycarbonat und
B) 0,05 Gew.-% bis 10,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Digycerol,
wobei als Komponente B eine Mischung vorliegt, welche durch Teilveresterung von Glycerol und/oder Diglycerol mit einem Monocarbonsäuregemisch, enthaltend zwei oder mehr Monocarbonsäuren mit einer Kettenlänge von 6 bis 30 C-Atomen, erhältlich ist,
und wobei das Monocarbonsäuregemisch Ölsäure enthält.

2. Zusammensetzung nach Anspruch 1, **dadurch gekennzeichnet, dass** die Menge an Komponente B 0,05 bis 1,0 Gew.-% beträgt.

3. Zusammensetzung nach einem der vorhergehenden Ansprüche, **dadurch gekennzeichnet, dass** die Menge an aromatischem Polycarbonat mindestens 75 Gew.-% beträgt.

4. Zusammensetzung nach einem der vorhergehenden Ansprüche, bestehend aus den folgenden Komponenten:
A) 87,0 Gew.-% bis 99,95 Gew.-% aromatischem Polycarbonat,
B) 0,05 Gew.-% bis 6,0 Gew.-% des Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
wobei als Komponente B eine Mischung vorliegt, welche durch Teilveresterung von Glycerol und/oder Diglycerol mit einem Monocarbonsäuregemisch, enthaltend zwei oder mehr Monocarbonsäuren mit einer Kettenlänge von 6 bis 30 C-Atomen, erhältlich ist,
und
wobei das Monocarbonsäuregemisch Ölsäure enthält,
C) 0,0 Gew.-% bis 1,0 Gew.-% Thermostabilisator und
D) 0,0 Gew.% bis 6,0 Gew.-% eines oder mehrerer weiterer Additive aus der Gruppe der Antioxidantien, Entformungsmittel, Flammschutzmittel, UV-Absorber, IR-Absorber, Antistatika, optischen Aufheller, Farbmittel aus der Gruppe der organischen oder anorganischen Pigmente, Additive zur Lasermarkierung und/oder Schlagzähmodifikatoren.

5. Zusammensetzung gemäß einem der vorhergehenden Ansprüche, **dadurch gekennzeichnet, dass** die Zusammensetzung einen Thermostabilisator enthält.

6. Zusammensetzung gemäß einem der vorhergehenden Ansprüche, **dadurch gekennzeichnet, dass** die Zusammensetzung als Komponente A ein oder mehrere Copolycarbonate, enthaltend die Monomereinheiten der Formel (1), 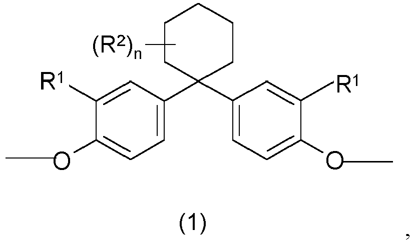 worin
R¹ für Wasserstoff oder einen C₁- bis C₄-Alkylrest steht,
R² für einen C₁- bis C₄-Alkylrest steht und
n für 0, 1, 2 oder 3 steht,
optional in Kombination mit einem weiteren aromatischen Homo- oder Copolycarbonat, enthaltend eine oder mehrere Monomereinheiten der allgemeinen Formel (2), 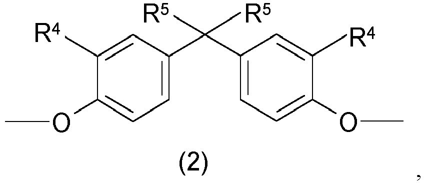 worin
R⁴ für H oder einen linearen oder verzweigten C₁- bis C₁₀-Alkylrest steht und
R⁵ für einen linearen oder verzweigten C₁- bis C₁₀-Alkylrest steht,
enthält, wobei das gegebenenfalls zusätzlich vorhandene weitere Homo- oder Copolycarbonat keine Monomereinheiten der Formel (1) aufweist.

7. Zusammensetzung gemäß Anspruch 6, **dadurch gekennzeichnet, dass** der Anteil der Monomereinheiten der Formel (1a) im Copolycarbonat 0,1 - 88 mol-%, bezogen auf die Summe der im Copolycarbonat enthaltenen Diphenol-Monomereinheiten, beträgt.

8. Zusammensetzung gemäß Anspruch 6 oder 7, **dadurch gekennzeichnet, dass** das Copolycarbonat enthaltend die Monomereinheiten der Formel (1) zusätzlich Monomereinheiten der Formel (3) enthält 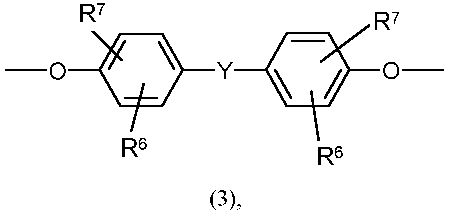 in welcher
R⁶ und R⁷ unabhängig voneinander für H, einen C₁- bis C₁₈-Alkylrest, einen C₁- bis C₁₈-Alkoxyrest, Halogen oder für einen jeweils gegebenenfalls substituierten Aryl- oder Aralkylrest stehen und
Y für eine Einfachbindung, -SO₂-, -CO-, -O-, -S-, einen C₁-bis C₆-Alkylenrest oder C₂-bis C₅-Alkylidenrest, einen C₆- bis C₁₂-Arylenrest, welcher gegebenenfalls mit weiteren Heteroatome enthaltenden aromatischen Ringen kondensiert sein kann, steht.

9. Zusammensetzung gemäß einem der Ansprüche 6 bis 8, **dadurch gekennzeichnet, dass** die Zusammensetzung als Komponente A einen Blend aus dem Copolycarbonat, enthaltend die Monomereinheiten der Formel (1), und Bisphenol A Homopolycarbonat enthält.

10. Zusammensetzung gemäß einem der Ansprüche 6 bis 9, **dadurch gekennzeichnet, dass** die Menge an Copolycarbonat, enthaltend die Monomereinheiten der Formel (1), in der Zusammensetzung mindestens 3 Gew.-% beträgt.

11. Formteile, Extrudate oder Mehrschichtsysteme, enthaltend eine Zusammensetzung nach einem der Ansprüche 1 bis 10.

12. Formteil nach Anspruch 11, aufweisend eine Wandstärke kleiner 3 mm.

## Claims

1. Composition comprising
A) 20.0 wt% to 99.95 wt% of aromatic polycarbonate and
B) 0.05 wt% to 10.0 wt% of a mixture comprising at least one saturated or unsaturated monocarboxylic acid having a chain length of 6 to 30 carbon atoms and at least one ester of this monocarboxylic acid based on glycerol and/or diglycerol,
wherein component B is a mixture obtainable by partial esterification of glycerol and/or diglycerol with a monocarboxylic acid mixture comprising two or more monocarboxylic acids having a chain length of 6 to 30 carbon atoms,
and wherein the monocarboxylic acid mixture comprises oleic acid.

2. Composition according to Claim 1, **characterized in that** the amount of component B is 0.05 to 1.0 wt%.

3. Composition according to either of the preceding claims, **characterized in that** the amount of aromatic polycarbonate is at least 75 wt%.

4. Composition according to any of the preceding claims, consisting of the following components:
A) 87.0 wt% to 99.95 wt% of aromatic polycarbonate,
B) 0.05 wt% to 6.0 wt% of the mixture comprising at least one saturated or unsaturated monocarboxylic acid having a chain length of 6 to 30 carbon atoms and at least one ester of this monocarboxylic acid based on glycerol and/or diglycerol,
wherein component B is a mixture obtainable by partial esterification of glycerol and/or diglycerol with a monocarboxylic acid mixture comprising two or more monocarboxylic acids having a chain length of 6 to 30 carbon atoms, and
wherein the monocarboxylic acid mixture comprises oleic acid,
C) 0.0 wt% to 1.0 wt% of thermal stabilizer and
D) 0.0 wt% to 6.0 wt% of one or more further additives from the group of the antioxidants, demoulding agents, flame retardants, UV absorbers, IR absorbers, antistats, optical brighteners, colourants from the group of the organic or inorganic pigments, additives for laser marking and/or impact modifiers.

5. Composition according to any of the preceding claims, **characterized in that** the composition comprises a thermal stabilizer.

6. Composition according to any of the preceding claims, **characterized in that** the composition comprises, as component A, one or more copolycarbonates containing the monomer units of the formula (1) 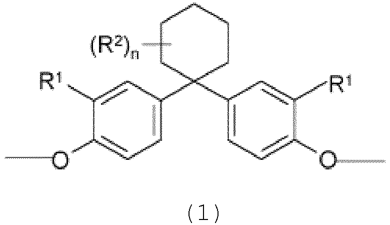 in which
R¹ is hydrogen or a C₁- to C₄-alkyl radical,
R² is a C₁- to C₄-alkyl radical and
n is 0, 1, 2 or 3,
optionally in combination with a further aromatic homo- or copolycarbonate containing one or more monomer units of the general formula (2) 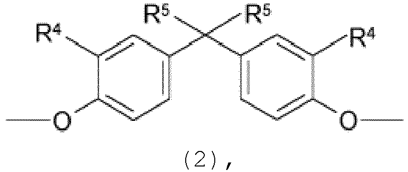 in which
R⁴ is H or a linear or branched C₁- to C₁₀-alkyl radical and
R⁵ is a linear or branched C₁- to C₁₀-alkyl radical;
where the further homo- or copolycarbonate which is optionally additionally present does not have any monomer units of the formula (1).

7. Composition according to Claim 6, **characterized in that** the proportion of the monomer units of the formula (1a) in the copolycarbonate is 0.1-88 mol%, based on the sum total of the diphenol monomer units present in the copolycarbonate.

8. Composition according to Claim 6 or 7, **characterized in that** the copolycarbonate containing the monomer units of the formula (1) additionally contains monomer units of the formula (3) 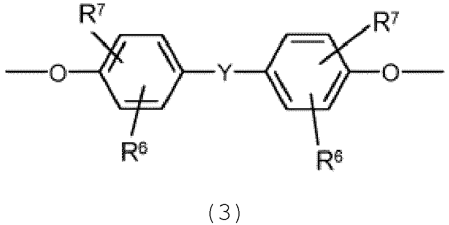 in which
R⁶ and R⁷ are independently H, a C₁- to C₁₈-alkyl radical, a C₁- to C₁₈-alkoxy radical, halogen or an in each case optionally substituted aryl or aralkyl radical and
Y is a single bond, -SO₂-, -CO-, -O-, -S-, a C₁-to C₆-alkylene radical or C₂- to C₅-alkylidene radical, a C₆- to C₁₂-arylene radical which may optionally be fused to further aromatic rings containing heteroatoms.

9. Composition according to any of Claims 6 to 8, **characterized in that** the composition comprises, as component A, a blend of the copolycarbonate containing the monomer units of the formula (1) and bisphenol A homopolycarbonate.

10. Composition according to any of Claims 6 to 9, **characterized in that** the amount of copolycarbonate containing the monomer units of the formula (1) in the composition is at least 3 wt%.

11. Mouldings, extrudates or multilayer systems comprising a composition according to any of Claims 1 to 10.

12. Moulding according to Claim 11, having a wall thickness of less than 3 mm.

## Revendications

1. Composition contenant :
A) 20,0 % en poids à 99,95 % en poids d'un polycarbonate aromatique et
B) 0,05 % en poids à 10,0 % en poids d'un mélange, contenant au moins un acide monocarboxylique saturé ou insaturé ayant une longueur de chaîne de 6 à 30 atomes C et au moins un ester de cet acide monocarboxylique à base de glycérol et/ou de diglycérol,
un mélange étant présent en tant que composant B, qui peut être obtenu par estérification partielle de glycérol et/ou de diglycérol avec un mélange d'acides monocarboxyliques, contenant deux acides monocarboxyliques ou plus ayant une longueur de chaîne de 6 à 30 atomes C,
et le mélange d'acides monocarboxyliques contenant de l'acide oléique.

2. Composition selon la revendication 1, **caractérisée en ce que** la quantité de composant B est de 0,05 à 1,0 % en poids.

3. Composition selon l'une quelconque des revendications précédentes, **caractérisée en ce que** la quantité de polycarbonate aromatique est d'au moins 75 % en poids.

4. Composition selon l'une quelconque des revendications précédentes, constituée des composants suivants :
A) 87,0 % en poids à 99,95 % en poids de polycarbonate aromatique,
B) 0,05 % en poids à 6,0 % en poids du mélange, contenant au moins un acide monocarboxylique saturé ou insaturé ayant une longueur de chaîne de 6 à 30 atomes C et au moins un ester de cet acide monocarboxylique à base de glycérol et/ou de diglycérol,
un mélange étant présent en tant que composant B, qui peut être obtenu par estérification partielle de glycérol et/ou de diglycérol avec un mélange d'acides monocarboxyliques, contenant deux acides monocarboxyliques ou plus ayant une longueur de chaîne de 6 à 30 atomes C,
et
le mélange d'acides monocarboxyliques contenant de l'acide oléique,
C) 0,0 % en poids à 1,0 % en poids d'un thermostabilisateur, et
D) 0,0 % en poids à 6,0 % en poids d'un ou de plusieurs additifs supplémentaires du groupe constitué par les antioxydants, les agents de démoulage, les agents ignifuges, les absorbeurs UV, les absorbeurs IR, les antistatiques, les azurants optiques, les colorants du groupe constitué par les pigments organiques ou inorganiques, les additifs pour le marquage laser et/ou les modificateurs de la résistance aux impacts.

5. Composition selon l'une quelconque des revendications précédentes, **caractérisée en ce que** la composition contient un thermostabilisateur.

6. Composition selon l'une quelconque des revendications précédentes, **caractérisée en ce que** la composition contient un ou plusieurs copolycarbonates en tant que composant A, contenant les unités monomères de la formule (1) : 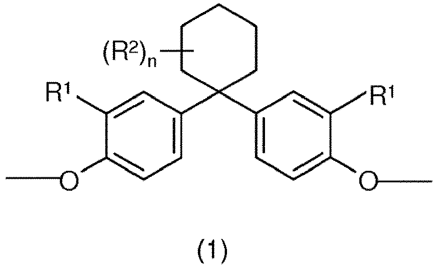 dans laquelle
R¹ représente l'hydrogène ou un radical alkyle en C₁ à C₄,
R² représente un radical alkyle en C₁ à C₄, et
n représente 0, 1, 2 ou 3,
éventuellement en combinaison avec un homo- ou copolycarbonate aromatique supplémentaire, contenant une ou plusieurs unités monomères de la formule générale (2) : 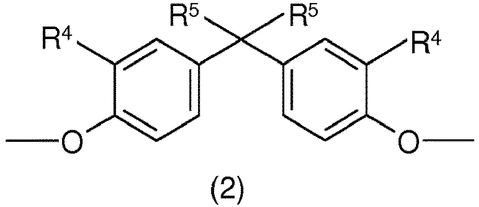 dans laquelle
R⁴ représente H ou un radical alkyle en C₁ à C₁₀ linéaire ou ramifié, et
R⁵ représente un radical alkyle en C₁ à C₁₀ linéaire ou ramifié ;
l'homo- ou le copolycarbonate supplémentaire éventuellement en outre présent ne comprenant pas d'unités monomères de la formule (1).

7. Composition selon la revendication 6, **caractérisée en ce que** la proportion des unités monomères de la formule (1a) dans le copolycarbonate est de 0,1 à 88 % en moles, par rapport à la somme des unités monomères diphénol contenues dans le copolycarbonate.

8. Composition selon la revendication 6 ou 7, **caractérisée en ce que** le copolycarbonate contenant les unités monomères de la formule (1) contient en outre des unités monomères de la formule (3) : 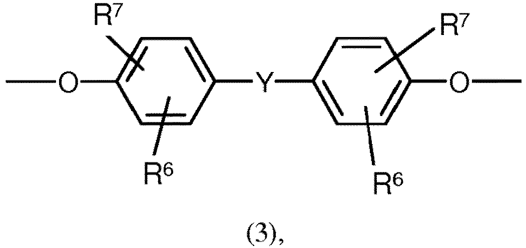 dans laquelle
R⁶ et R⁷ représentent indépendamment l'un de l'autre H, un radical alkyle en C₁ à C₁₈, un radical alcoxy en C₁ à C₁₈, un halogène ou un radical aryle ou aralkyle à chaque fois éventuellement substitué, et
Y représente une simple liaison, -SO₂-, -CO-, -O-, -S-, un radical alkylène en C₁ à C₆ ou un radical alkylidène en C₂ à C₅, un radical arylène en C₆ à C₁₂, qui peut éventuellement être condensé avec des cycles aromatiques contenant des hétéroatomes supplémentaires.

9. Composition selon l'une quelconque des revendications 6 à 8, **caractérisée en ce que** la composition contient en tant que composant A un mélange du copolycarbonate, contenant les unités monomères de la formule (1), et d'un homopolycarbonate de bisphénol A.

10. Composition selon l'une quelconque des revendications 6 à 9, **caractérisée en ce que** la quantité de copolycarbonate, contenant les unités monomères de la formule (1), dans la composition est d'au moins 3 % en poids.

11. Pièces moulées, extrudats ou systèmes multicouches, contenant une composition selon l'une quelconque des revendications 1 à 10.

12. Pièce moulée selon la revendication 11, présentant une épaisseur de paroi inférieure à 3 mm.
